Europäisches Patentamt

**European Patent Office**

Office européen des brevets

(11) Veröffentlichungsnummer: **0 068 063**
**A2**

(12) **EUROPÄISCHE PATENTANMELDUNG**

(21) Anmeldenummer: **82100063.5**

(22) Anmeldetag: **07.01.82**

(51) Int. Cl.³: **G 01 D 15/00**

(30) Priorität: **30.06.81 DE 3125582**

(43) Veröffentlichungstag der Anmeldung: **05.01.83**
**Patentblatt 83/1**

(84) Benannte Vertragsstaaten: **AT DE FR GB IT NL**

(71) Anmelder: **ROBERT BOSCH GMBH, Postfach 50, D-7000 Stuttgart 1 (DE)**

(72) Erfinder: **Hanke, Dieter-Georg, Ing. grad., Londoner Strasse 52, D-1000 Berlin 65 (DE)**

(74) Vertreter: **Schmidt, Hans-Ekhardt, Robert Bosch GmbH Geschäftsbereich Elektronik Patent- und Lizenzabteilung Forckenbeckstrasse 9-13, D-1000 Berlin 33 (DE)**

(54) **Elektromechanische Aufzeichnungsvorrichtung.**

(57) Es wird eine elektromechanische Aufzeichnungsvorrichtung vorgeschlagen, die sich insbesondere durch einen einfachen Aufbau auszeichnet. Die Aufzeichnungsvorrichtung besteht aus einem alle Teile aufnehmenden Gehäuse (10) aus zwei über ein Gelenk (14) miteinander verbundenen Gehäuseteilen (12, 13). Das erste Gehäuseteil (12) nimmt den Aufzeichnungsträger (44) und die Transportvorrichtung mit Ausnahme der Andruckrolle (32) sowie eine elektrische Ansteuerungsvorrichtung (23) auf. Das zweite Gehäuseteil (13) enthält die Andruckrolle sowie eine Schreibvorrichtung (33) und eine federnde Abdeckplatte (39) als mechanische Schutz- und Reinigungsvorrichtung für die Schreibvorrichtung. Die Aufzeichnungsvorrichtung kann als Vorrichtung ohne elektronische Ansteuerungsvorrichtung ausgebildet sein und dann in Verbindung mit einem elektrischen Gerät (51), das die Ansteuerungsvorrichtung enthält, benutzt werden. In diesem Fall kann die Aufzeichnungsvorrichtung entweder außen an der Frontwand (52) des elektrischen Gerätes oder in einer Vertiefung (57) desselben angeordnet werden.

14/81
EK/PLI Scht/Li
29. Juni 1981


ROBERT BOSCH GMBH, 7000 Stuttgart 1


Elektromechanische Aufzeichnungsvorrichtung


Stand der Technik


Die Erfindung geht aus von einer elektromechanischen Aufzeichnungsvorrichtung nach der Gattung des Hauptanspruchs.

Es ist schon eine elektromechanische Aufzeichnungsvorrichtung bekannt (Funk-Technik, 1981, Heft 1, Seite 21), deren elektronische Ansteuerungsvorrichtung in einem Gerätegehäuse untergebracht ist, das ein Fach enthält, welches einen einen Elektromotor, eine Antriebsrolle und eine auswechselbare Kassette mit aufgewickeltem Registrier-Metall-Papier (RMP) enthaltenden Einschub aufnimmt. Die Schreibvorrichtung, das ist eine Kammelektrode, und eine Andruckrolle sind innerhalb des genannten Faches gerätefest angeordnet.

Die bekannte Aufzeichnungsvorrichtung benötigt somit eine Kassette, in die das Registrier-Metall-Papier nach dem Öffnen der Kassette eingefädelt werden muß. Durch die Trennung von Einschub und gehäusefester Andruckrolle und Schreibvorrichtung können sich Fertigungstoleranzen störend bemerkbar machen. Außerdem ist die gehäusefeste Schreibvorrichtung für spätere Wartungs- und Reparaturarbeiten unter Umständen schlecht zugänglich.

- 2 -

## Vorteile der Erfindung

Die erfindungsgemäße elektromechanische Aufzeichnungsvorrichtung mit den kennzeichnenden Merkmalen des Hauptanspruchs hat den Vorteil, daß alle zu der elektromechanischen Aufzeichnungsvorrichtung gehörenden Teile in einem einzigen Gehäuse untergebracht werden. Es ist also keine gesonderte Kassette zur Aufnahme des bandförmigen Aufzeichnungsträgers erforderlich. Vielmehr stellt die erfindungsgemäße Aufzeichnungsvorrichtung eine voll funktionsfähige Baueinheit dar.

Durch die in den Unteransprüchen aufgeführten Maßnahmen sind vorteilhafte Weiterbildungen und Verbesserungen der im Hauptanspruch angegebenen Aufzeichnungsvorrichtung möglich. Besonders vorteilhaft ist eine Weiterbildung der erfindungsgemäßen Aufzeichnungsvorrichtung, bei der die Aufzeichnungsvorrichtung mit Verbindungsmitteln zum elektrischen und/oder mechanischen Verbinden mit einem die aufzuzeichnenden Informationen liefernden elektrischen Gerät versehen ist. Dann kann die Aufzeichnungsvorrichtung beispielsweise an einer Außenwand des elektrischen Gerätes, zum Beispiel über einen Steckverbinder, befestigt werden, wobei gleichzeitig die elektrische Verbindung hergestellt werden kann.

## Zeichnung

Ausführungsbeispiele der Erfindung sind in der Zeichnung an Hand mehrerer Figuren dargestellt und in der nachfolgenden Beschreibung näher erläutert. Die Zeichnung zeigt in

Fig. 1 eine Ansicht einer erfindungsgemäßen Aufzeichnungsvorrichtung in aufgeklapptem Zustand,

Fig. 2    eine Draufsicht zu der Aufzeichnungsvorrichtung
          nach Fig. 1,

Fig. 3    eine Ansicht der erfindungsgemäßen Aufzeichnungsvorrichtung in geschlossenem Zustand des Gehäuses,
          teilweise im Schnitt,

Fig. 4    eine Ansicht der erfindungsgemäßen Aufzeichnungsvorrichtung in einer zweiten Ausführungsform, bei
          der die Aufzeichnungsvorrichtung an einer Gerätewand befestigt ist,

Fig. 5    eine Seitenansicht zu Fig. 4 bei geschlossenem
          Gehäuse und

Fig. 6    eine Ansicht einer erfindungsgemäßen Aufzeichnungsvorrichtung in einer dritten Ausführungsform, bei
          der die Aufzeichnungsvorrichtung in eine Öffnung
          eines Gerätes eingeschoben ist.

Beschreibung der Erfindung

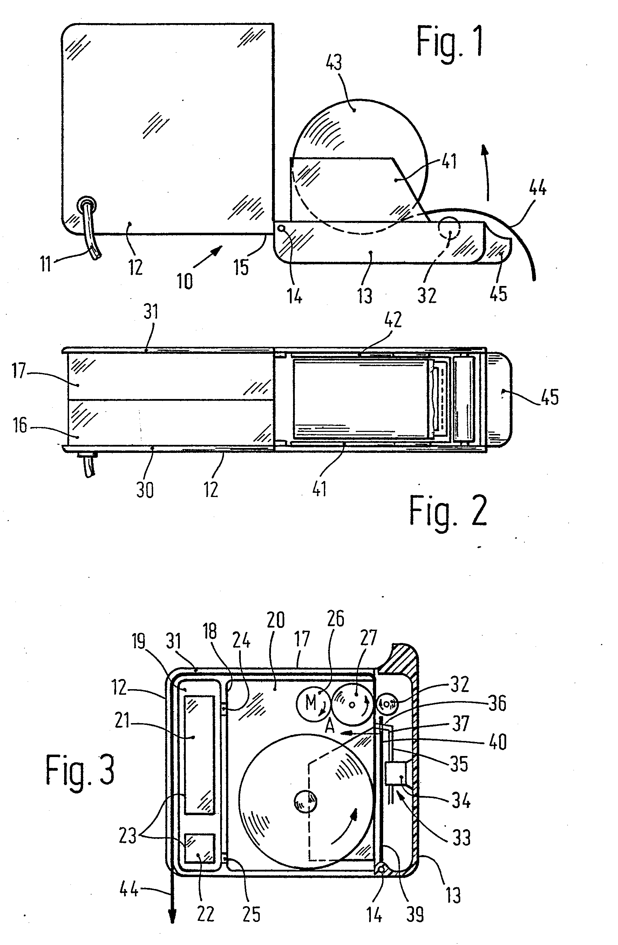

Nach Fig. 1 weist eine erfindungsgemäße elektromechanische
Aufzeichnungsvorrichtung ein Gehäuse 10 auf, das über ein
mehradriges Kabel 11 mit einer in Fig. 1 nicht dargestellten Stromversorgung und mit einem die aufzuzeichnenden
Informationen liefernden Gerät in Verbindung steht. Das
Gehäuse 10 besteht aus einem ersten Gehäuseteil 12 und
einem zweiten Gehäuseteil 13. Die Gehäuseteile sind durch
ein Gelenk 14, das sich an der in der Gebrauchslage der
Aufzeichnungsvorrichtung unteren Gehäuseseite 15 befindet,
verbunden. Das Gehäuse 10 ist quaderförmig ausgebildet.
Das erste Gehäuseteil 12 besteht aus zwei Halbschalen 16
und 17 und ist durch eine Trennwand 18 in zwei Kammern
19 und 20 aufgeteilt (vgl. Fig. 3). Die linke Kammer 19 enthält Bauteile 21, 22 einer elektronischen Ansteuerungsvorrichtung 23. Die Bauteile 21 und 22, das sind integrierte
Schaltungen, befinden sich beispielsweise auf einer Leiterplatte, deren elektrische Anschlüsse mit dem Kabel 11 bzw.
mit Leitungen verbunden sind, die zum Teil durch Öffnungen
24 und 25 in der Trennwand 18 in die Kammer 20 führen.

Die Kammer 20 enthält im oberen Bereich einen fest mit dem
ersten Gehäuseteil 12 verbundenen Elektromotor 26, der entweder unmittelbar oder über ein Getriebe eine Antriebsrolle 27
in Umdrehungen versetzt, die in dem ersten Gehäuseteil drehbar gelagert ist.

Das erste Gehäuseteil 12 trägt an seiner oberen und linken
Stirnseite (vgl. Fig. 2) flanschartige Ränder 30 und 31,
deren Bedeutung weiter unten beschrieben wird.

Das zweite Gehäuseteil 13 ist kappenförmig ausgebildet. Es
enthält im Bereich der Antriebsrolle 26 des ersten Gehäuseteils 12 eine Andruckrolle 32, die achsparallel zu der
Antriebsrolle 26 angeordnet und federnd gelagert ist.
Weiterhin enthält das zweite Gehäuseteil 13 eine Schreibvorrichtung 33 mit einem Halter 34 für eine Kammelektrode 35.
Die Kammelektrode verläuft im wesentlichen parallel zu der
Längsausdehnung des zweiten Gehäuseteils. Ihre Elektrodenspitzen 36 sind in einer Richtung abgebogen, die quer zu der
Längsausdehnung des Gehäuses liegt. Die Kammelektrode ist
ebenso wie eine Gegenelektrode 37 federnd ausgebildet. Über
der Schreibvorrichtung 33 befindet sich eine elastische
Abdeckplatte 39, die als mechanische Schutz- und Reinigungsvorrichtung für die Schreibvorrichtung dient und einen
Schlitz 40 zum Durchtritt der Elektrodenspitzen und der Gegenelektrode enthält. Die Abdeckplatte ist an der der Andruckrolle 32 gegenüberliegenden Seite des zweiten Gehäuseteils 13
gelagert.

Das zweite Gehäuseteil 13 weist zwei seitliche Wangen 41, 42
auf. Ein Wickel 43 besteht aus einem bandförmigen Aufzeichnungsträger 44, das ist zum Beispiel Registrier-Metall-Papier.
Das zweite Gehäuseteil 13 weist außerdem an seiner in der
Gebrauchslage oberen Stirnwand einen leistenförmigen Ansatz 45
auf, der das Auf- oder Zuklappen des Gehäuses 10 erleichtert.

Die Wirkungsweise der vorstehend beschriebenen elektromechanischen Aufzeichnungsvorrichtung ist folgende. Zunächst
wird bei aufgeklappter Aufzeichnungsvorrichtung der Wickel 43
(vgl. Fig. 1) zwischen den beiden Wangen 41 und 42 des zweiten
Gehäuseteils 13 eingefügt, wobei das freie Ende des Aufzeichnungsträgers 44 über der Andruckrolle 32 liegt. Dann wird das
zweite Gehäuseteil 13 an das erste Gehäuseteil 12 geschwenkt,
wobei das freie Ende des Aufzeichnungsträgers 44 zwischen der
Antriebsrolle 27 und der Andruckrolle 32 zu liegen kommt. Das
freie Ende wird dann etwas aus der Aufzeichnungsvorrichtung
herausgezogen und in der in Fig. 3 gezeigten Weise außen um
das erste Gehäuseteil 12 gelegt, wobei die Ränder 30 und 31
als Führung dienen. Damit ist die Aufzeichnungsvorrichtung
betriebsbereit.

Liefert nun ein über das Kabel 11 mit der Aufzeichnungsvorrichtung verbundenes Gerät Informationen, so werden durch
diese über die elektronische Ansteuerungsvorrichtung 23 der
Elektromotor 26 und die Kammelektrode 35 angesteuert. Die
jeweils angesteuerten Elektrodenspitzen 36 der Kammelektrode
brennen in das Registrier-Metall-Papier Löcher, aus denen
alphanumerische Zeichen matrixartig zusammengesetzt sind.

Ist der Aufzeichnungsträgervorrat erschöpft, dann ergreift
die Bedienungsperson den Ansatz 45 und klappt das zweite
Gehäuseteil 13 nach unten. Dadurch kann sich die federnde
Abdeckplatte 39 in Pfeilrichtung A (vgl. Fig. 3) bewegen,

wodurch Abbrandrückstände des Registrier-Metall-Papiers von
den Elektrodenspitzen automatisch abgestreift werden. An der
den Elektrodenspitzen und der Gegenelektrode gegenüberliegenden Seite des Aufzeichnungsträgers 44 kann in dem ersten
Gehäuseteil 12 ein Gegenlager vorgesehen sein, das in Fig. 3
der Übersichtlichkeit halber weggelassen ist.

Die elektrische Verbindung zwischen den einzelnen Elektrodenspitzen der Kammelektrode 35 bzw. der Gegenelektrode 37 und
der elektronischen Ansteuerungsvorrichtung 23 erfolgt über
ein elastisches Bandkabel, das in Fig. 3 der Übersichtlichkeit halber weggelassen ist.

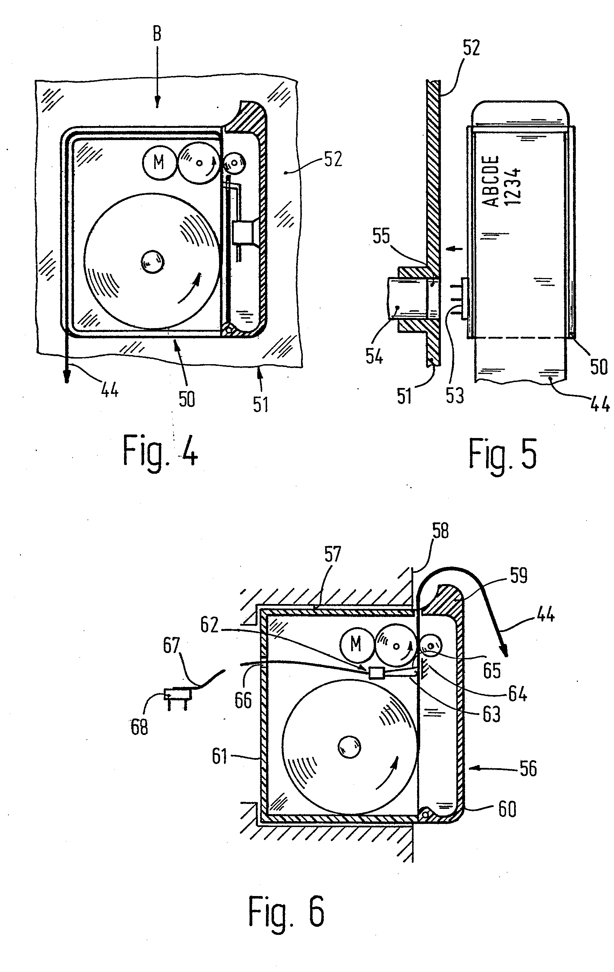

Bei dem Ausführungsbeispiel nach Fig. 4 wird davon ausgegangen, daß die elektronische Ansteuerungsvorrichtung für eine
elektromechanische Aufzeichnungsvorrichtung 50 Bestandteil
eines elektrischen Gerätes 51 ist. Die Aufzeichnungsvorrichtung 50 ist an der Frontseite 52 des elektrischen Gerätes
über Verbindungsmittel 53, 54 elektrisch und mechanisch mit
dem elektrischen Gerät verbunden. Zu diesem Zweck trägt die
Aufzeichnungsvorrichtung 50 an einer ihrer großflächigen
Seiten einen ersten Steckverbinder 53. Der erste Steckverbinder paßt in eine Öffnung 55 des elektrischen Gerätes 51
und kommt dort mit einem zweiten Steckverbinder 54 in Eingriff.

Die Frontseite 52 kann beispielsweise zu einem Funkgerät
gehören, mit dem aufzuzeichnende Informationen empfangen
werden. Die mit der Aufzeichnungsvorrichtung 50 aufgezeichneten Informationen können dann schon kurz nach der Aufzeichnung von der Bedienungsperson von der Oberseite der Aufzeichnungsvorrichtung (vgl. Pfeilrichtung B in Fig. 4) abgelesen
werden. Die Frontseite kann gegebenenfalls auch das Armaturenbrett eines Kraftfahrzeuges sein.

In einer weiteren in Fig. 6 gezeigten Ausführungsform ist eine elektromechanische Aufzeichnungsvorrichtung 56 ebenfalls ohne elektronische Ansteuerungsvorrichtung ausgebildet. Die elektromechanische Aufzeichnungsvorrichtung paßt in eine Vertiefung 57 eines elektrischen Gerätes 58. In diesem Fall wird der Aufzeichnungsträger 44 über einen leistenförmigen Ansatz 59 eines zweiten Gehäuseteils 60 von zwei Gehäuseteilen 60, 61 geführt.

Motor, Antriebsrolle und Andruckrolle sind in dem Ausführungsbeispiel nach Fig. 6 in gleicher Weise wie bei dem Ausführungsbeispiel in Fig. 3 angeordnet. Dagegen nehmen eine Schreibvorrichtung 62 und eine Gegenelektrode 63 eine im wesentlichen horizontale Lage innerhalb des ersten Gehäuseteils 61 der Aufzeichnungsvorrichtung 56 ein. Ein Gegenlager 64, das in dem zweiten Gehäuseteil 60 untergebracht ist, ist in Fig. 6 nur schematisch angedeutet. Es liegt der Schreibvorrichtung und der Gegenelektrode auf der gegenüberliegenden Seite des Aufzeichnungsträgers 44 gegenüber. Der Elektrodenkamm 65 der Schreibvorrichtung ist in diesem Fall leicht in Transportrichtung des Aufzeichnungsträgers 44 abgewinkelt, während die aus einem federnden Blech bestehende Gegenelektrode 63 an ihrem Ende einwärts gerollt ist. Die elektrischen Anschlüsse für die Schreibvorrichtung 62, die Gegenelektrode 63 und den Motor stehen über ein durch eine Öffnung 66 des zweiten Gehäuseteils 60 geführtes flaches Kabel 67 mit einem Steckverbinder 68 in Verbindung. Der Steckverbinder 68 steht mit einem zweiten Steckverbinder des elektrischen Gerätes 58 in Eingriff.

Die Aufzeichnungsvorrichtung nach dem Ausführungsbeispiel gemäß Fig. 6 hat im übrigen die gleiche Wirkungsweise wie die vorstehend beschriebenen Aufzeichnungsvorrichtungen.

In allen Fällen ist dafür gesorgt, daß der bei der Aufzeichnung entstehende Abbrand des Aufzeichnungsträgers nach unten fallen kann und nicht an der Andruckrolle bzw. der Antriebsrolle haftenbleibt.

14/81
EK/PLI Scht/Li
29. Juni 1981

ROBERT BOSCH GMBH, 7000 Stuttgart 1

Ansprüche

1. Elektromechanische Aufzeichnungsvorrichtung mit einer
   Schreibvorrichtung, einem bandförmigen Aufzeichnungsträger, einer den Aufzeichnungsträger an der Schreibvorrichtung vorbeibewegenden Transportvorrichtung aus
   Elektromotor, Antriebsrolle und federnder Andruckrolle
   sowie mit einer elektronischen Ansteuerungsvorrichtung
   für die Schreibvorrichtung und den Motor, dadurch
   gekennzeichnet, daß ein alle Teile der Aufzeichnungsvorrichtung aufnehmendes Gehäuse (10) aus zwei über
   ein Gelenk (14) miteinander verbundenen Gehäuseteilen
   (12, 13) besteht, von denen das erste Gehäuseteil (12)
   den Aufzeichnungsträger (44), die Transportvorrichtung
   (26, 27) mit Ausnahme der Andruckrolle (32) und die
   elektronische Ansteuerungsvorrichtung (23) und das
   zweite Gehäuseteil (13) die Andruckrolle (32), die
   Schreibvorrichtung (33) und eine federnde Abdeckplatte
   (39) als mechanische Schutz- und Reinigungsvorrichtung
   für die Schreibvorrichtung enthält.

2. Elektromechanische Aufzeichnungsvorrichtung nach
   Anspruch 1, dadurch gekennzeichnet, daß das Gehäuse (10)
   die Form eines Quaders hat und daß das Gelenk (14) an
   der in der Gebrauchslage der Aufzeichnungsvorrichtung
   unten befindlichen Stirnwand des Gehäuses vorhanden ist.

3. Elektromechanische Aufzeichnungsvorrichtung nach
   Anspruch 1, dadurch gekennzeichnet, daß die Aufzeichnungsvorrichtung Verbindungsmittel (11) zum elektrischen
   und/oder mechanischen Verbinden mit einem die aufzuzeichnenden Informationen liefernden elektrischen Gerät aufweist.

4. Elektromechanische Aufzeichnungsvorrichtung nach Anspruch 1 oder 3, dadurch gekennzeichnet, daß die elektronische Ansteuerungsvorrichtung (23) Bestandteil des elektrischen Gerätes (51) ist.

5. Elektromechanische Aufzeichnungsvorrichtung nach Anspruch 3 oder 4, dadurch gekennzeichnet, daß die Verbindungsmittel (53, 54) aus einem mit der Aufzeichnungsvorrichtung (50) verbundenen ersten Steckverbinder (53) und einem in einer Vertiefung (55) einer Frontwand (52) eines elektrischen Gerätes (51) enthaltenen zweiten Steckverbinder (54) besteht.

6. Elektromechanische Aufzeichnungsvorrichtung nach Anspruch 1, 2 oder 3, dadurch gekennzeichnet, daß der Innenraum des ersten, aus zwei lösbar miteinander verbundenen Halbschalen (16, 17) bestehenden Gehäuseteils (12) in zwei gegebenenfalls durch eine Trennwand (18) getrennte Kammern (19, 20) aufgeteilt ist, von denen die eine Kammer (19) die elektronische Ansteuerungsvorrichtung (23) und die andere Kammer (20) in dem in der Gebrauchslage der Aufzeichnungsvorrichtung unten liegenden Bereich den zu einem Wickel (43) aufgewickelten Aufzeichnungsträger (44) und in dem darüberliegenden Bereich den mit dem ersten Gehäuseteil (12) fest verbundenen Motor (26) und die in dem ersten Gehäuseteil drehbar gelagerte und mit dem Motor gekuppelte Antriebsrolle (27) enthält.

7. Elektromechanische Aufzeichnungsvorrichtung nach Anspruch 6, dadurch gekennzeichnet, daß der zweite Gehäuseteil (13) kappenförmig ausgebildet ist und daß die Andruckrolle (32) parallel zu der Antriebsrolle (27) und die aus Kammelektrode (35) und Gegenelektrode (37) bestehende Schreibvorrichtung sowie eine Abdeckplatte (39) in dem zweiten Gehäuseteil federnd angeordnet sind.

8. Elektromechanische Aufzeichnungsvorrichtung nach Anspruch 7, dadurch gekennzeichnet, daß Kammelektrode (35), Gegenelektrode (37) und Abdeckplatte (39) im wesentlichen parallel zu der Längsausdehnung des zweiten Gehäuseteils (13) angeordnet sind.

9. Elektromechanische Aufzeichnungsvorrichtung nach einem der Ansprüche 1 bis 8, dadurch gekennzeichnet, daß das zweite Gehäuseteil (13) an seiner in der Gebrauchslage oben liegenden Stirnwand einen leistenförmigen Ansatz (45) zum Öffnen und Schließen des Gehäuses (10) trägt.

10. Elektromechanische Aufzeichnungsvorrichtung nach einem der Ansprüche 1 bis 9, dadurch gekennzeichnet, daß der Aufzeichnungsträger (44) über die in der Gebrauchslage oben liegende Stirnwand und eine angrenzende seitliche Stirnwand transportiert wird und zur Führung des Aufzeichnungsträgers flanschartige Ränder (30, 31) vorgesehen sind.

11. Elektromechanische Aufzeichnungsvorrichtung nach einem der Ansprüche 1 bis 10, dadurch gekennzeichnet, daß die Schreibvorrichtung (62) in dem ersten Gehäuseteil (61) waagerecht angeordnet ist.

12. Elektromechanische Aufzeichnungsvorrichtung nach Anspruch 1 und 9, dadurch gekennzeichnet, daß die Aufzeichnungsvorrichtung (56) in eine Vertiefung eines elektrischen Gerätes (58) einsteckbar ist und daß der Aufzeichnungsträger (44) über den leistenförmigen Ansatz (59) des zweiten Gehäuseteils (60) geführt ist.

13. Elektromechanische Aufzeichnungsvorrichtung nach Anspruch 1 oder einem der folgenden, dadurch gekennzeichnet, daß der eine Kammelektrode (35) und eine Gegenelektrode (37) umfassenden Schreibvorrichtung (33) auf der dem Aufzeichnungsträger (44) gegenüberliegenden Seite ein Gegenlager (64) zugeordnet ist.

Fig. 1

Fig. 2

Fig. 3

Fig. 4

Fig. 5

Fig. 6